# EUROPÄISCHE PATENTSCHRIFT

(11) **EP 2 999 895 B1**
(45) Veröffentlichungstag und Bekanntmachung des Hinweises auf die Patenterteilung: **27.01.2021**
(21) Anmeldenummer: 14725637.4
(22) Anmeldetag: 15.05.2014
(51) Int. Cl.: F16D 1/08

(54) **WELLE-NABE-VERBINDUNG UND GETRIEBEMOTOR**
SHAFT-HUB CONNECTION AND GEAR MOTOR
LIAISON ARBRE-MOYEU ET ÉLECTRORÉDUCTEUR

(30) Priorität: 23.05.2013 DE 102013008729
(43) Veröffentlichungstag der Anmeldung: 30.03.2016
(73) Patentinhaber: SEW-EURODRIVE GmbH & Co. KG, 76646 Bruchsal (DE)
(72) Erfinder: KASPER, Jürgen, 67360 Lingenfeld (DE); SCHILLINGER, Jens, 76437 Rastatt (DE); DENEFLEH, Roland, 64683 Einhausen (DE)
(86) Internationale Anmeldenummer: PCT/EP2014/001313
(87) Internationale Veröffentlichungsnummer: WO 2014/187540

(56) Entgegenhaltungen:
- DE-A1-102007 035 777
- DE-A1-102011 013 887
- US-A1- 2011 174 587

## Beschreibung

Die Erfindung betrifft **einen Getriebemotor mit einer Welle-Nabe-Verbindung.**

Es ist allgemein bekannt, dass ein Zahnrad mittels einer Welle-Nabe-Verbindung auf einer Welle befestigbar ist, wobei eine formschlüssige Verbindung mittels einer in einer Nut angeordneten Passfeder ausführbar ist.

Aus der DE 10 2007 035 777 A1 ist ein Adapter für ein Planetengetriebe bekannt.

**Aus der** DE 157 44 38 A **ist ein dehnbarer Spanndorn für rohrförmige Kerne bekannt.**

**Aus der** US 4 544 054 A **ist eine Welle und ein Adapter für eine Kupplung bekannt.**

**Aus der** FR 1156627 A **ist eine Welle-Nabe-Verbindung mit drei Klemmpunkten bekannt.**

**Aus der** DE 10 2011 013 887 A1 **ist eine Klemmkupplung zur drehfesten Verbindung zweier drehender Teile, vorzugsweise Welle und Nabe, bekannt.**

**Aus der** US 2 437 305 A **sind Gewindestifte zur Klemmverbindung zwischen einer Welle und einer Nabe bekannt.**

**Aus der** US 2 804 322 A **ist eine Klemmverbindung bekannt, bei der drei in Umfangsrichtung voneinander beabstandete Gewindestifte auf eine Welle drücken und diese somit klemmverbinden.**

**Aus der** US 4 006 993 A **ist eine Wellenbefestigungsanordnung bekannt.**

**Aus der** DE 2 752 425 A1 **ist ein Ring mit Einrichtung zum Befestigen desselben an einer Welle bekannt.**

**Aus der** DE 10 2011 013 887 A1 **ist eine Klemmkupplung zur drehfesten Verbindung zweier drehender Teile, vorzugsweise Welle und Nabe, bekannt.**

**Aus der** US 2011/174587 A1 **ist eine Drehmomentkupplung mit einer Welle-Nabe-Verbindung bekannt.**

**Aus der** DE 10 2007 035 777 A1**ist ein Planetengetriebe mit einer eintriebsseitigen vorkomplettierten Ausbildung bekannt.**

Der Erfindung liegt daher die Aufgabe zugrunde, eine Welle-Nabe-Verbindung weiterzubilden, wobei ein gleichmäßiges Klemmen erfolgen soll.

Erfindungsgemäß wird die Aufgabe bei dem **Getriebemotor mit einer Welle-Nabe-Verbindung** nach den in Anspruch 1 angegebenen Merkmalen gelöst.

**Wichtige Merkmale bei einem Getriebemotor mit einer Welle-Nabe-Verbindung sind, dass die Welle eine Motorwelle, insbesondere Rotorwelle eines Elektromotors, ist.**

**Von Vorteil ist dabei, dass eine einfach zu betätigende Motor-Getriebe-Verbindung realisierbar ist. Denn die Motorwelle, also Rotorwelle, muss nur in den Hohlwellenabschnitt des Adapters eingeführt werden und ist dann klemmverbindbar, also spielfrei verbindbar.**

Wichtige Merkmale der Erfindung bei der Welle-Nabe-Verbindung sind, dass eine Welle in einer Aufnahmeöffnung einer Nabe, **also Hülse,** aufgenommen ist,
**wobei** auf der Nabe ein Klemmring angeordnet ist,
wobei der Klemmring eine Gewindebohrung, insbesondere eine radial gerichtete Gewindebohrung, aufweist, in welcher eine Spannschraube eingeschraubt ist,
wobei die Spannschraube auf die **Nabe** drückt.

Von Vorteil ist dabei, dass ein in Umfangsrichtung gleichmäßiges Anliegen des Klemmrings bewirkbar ist, obwohl die Spanschraube nur an einer Umfangsstelle gegen die Adapterwelle drückt. Dabei wird der Hohlwellenabschnitt der Adapterwelle von der Spannschraube derart radial gedrückt, dass die Adapterwelle an drei vorgesehenen Umfangspositionen am Klemmring anliegt, zwischen denen der Klemmring Umfangspositions-Bereiche mit nach radial außen gerichtete Ausnehmungen aufweist, so dass in diesen Bereichen ein radialer Spalt zwischen dem Klemmring und der Adapterwelle vorgesehen ist. Die erste Umfangsposition ist dabei der Berührbereich der Spannschraube selbst, die weiteren Berührbereiche sind definiert durch die nach radial innen gerichtet hervortretenden Erhebungen zwischen den Ausnehmungen.

Bei einer vorteilhaften Ausgestaltung ist die Welle mehrstückig, insbesondere also mehrteilig, aufgebaut, wobei **auf einem Vollwellenabschnitt** der Welle **die** Hülse aufgesteckt ist,
so dass die Spannschraube auf die Hülse der Welle drückt. Von Vorteil ist dabei, dass der Durchmesser mittels der Hülse anpassbar ist auf den Innendurchmesser des die Welle mit Hülse aufnehmenden Hohlwellenabschnitts der Adapterwelle. Welle und Hülse sind also als eine durchmesserangepasste Welle definierbar.

Bei einer vorteilhaften Ausgestaltung weist der Klemmring eine weitere Gewindebohrung auf, in welcher ein Gewindestift eingeschraubt ist, welcher in eine Vertiefung der Welle, insbesondere der Hülse der Welle, hineinragt. Von Vorteil ist dabei, dass eine Verdrehsicherung ausführbar ist.

Erfindungsgemäß weist der Klemmring an seiner der Nabe, also Adapterwelle, zugewandten Innenseite n Ausnehmungen auf, wobei die Ausnehmungen radial gerichtete Rücknahmen der ansonsten zylindrischen Innenseite sind. In den Umfangspositionsbereichen
der n Ausnehmungen ein Radialspalt zwischen dem Klemmring und der Adapterwelle entsteht. Somit ist die Berührung zwischen Adapterwelle und Klemmring auf die vorgesehenen Umfangspositionen beschränkt.

Bei einer vorteilhaften Ausgestaltung sind die Ausnehmungen in Umfangsrichtung voneinander regelmäßig beabstandet. Von Vorteil ist dabei, dass ein gleichmäßiges Anliegen der Adapterwelle am Klemmring erreichbar ist.

Bei einer vorteilhaften Ausgestaltung sind die Ausnehmungen ein n-faches Polygon, insbesondere hypotrochoidales Polygon. Von Vorteil ist dabei, dass der Verlauf der Spannungskräfte möglichst glatt ist und somit hohe Verbindungskräfte durchleitbar sind.

Bei einer anderen vorteilhaften Ausgestaltung sind die Ausnehmungen kreisabschnittsförmig ausgeformt,
insbesondere wobei zur Fertigung der jeweiligen Ausnehmung ein außermittig zur Mittelachse des Klemmrings angeordnetes rotierendes Fräswerkzeug axial in den Klemmring hineinbewegbar ist. Von Vorteil ist dabei, dass eine besonders einfache Fertigung ausführbar ist.

Bei einer vorteilhaften Ausgestaltung ist die Anzahl n gleich drei oder größer als drei, insbesondere aber kleiner als zehn. Von Vorteil ist dabei, dass eine einfache Herstellung ermöglicht ist und die Ausnehmungen ein genügend große radiale Vertiefung aufweisen, wobei die Form des Klemmrings genügend glatt, also wenig kantig, ausführbar ist..

Erfindungsgemäß ist die Nabe eine Adapterwelle eines Getriebemotors. Die Erfindung ist an der eintreibenden Seite eines Getriebes anwendbar.

Bei einer vorteilhaften Ausgestaltung umgibt ein Flanschteil die Welle-Nabe-Verbindung mindestens teilweise gehäusebildend,
wobei das Flanschteil eine radial gerichtete Öffnung aufweist, durch welche ein Werkzeug, insbesondere Schraubendreher, einführbar ist zur Betätigung der Spannschraube. Von Vorteil ist dabei, dass eine einfache Betätigung ausführbar ist.

Bei einer vorteilhaften Ausgestaltung ist das Flanschteil zwischen einem Gehäuseteil, insbesondere Flanschteil, des Motors und einem Gehäuseteil, insbesondere Eintriebsflansch, des Getriebes angeordnet. Von Vorteil ist dabei, dass der Motor in einfacher Weise verbindbar ist mit dem Getriebe.

Bei einer vorteilhaften Ausgestaltung ist die Adapterwelle drehfest mit einer Sonnenwelle eines Planetengetriebes verbunden. Von Vorteil ist dabei, dass die Sonne mit der Motorwelle verbindbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein schematischer Längsschnitt durch ein erfindungsgemäßes Planetengetriebe dargestellt, bei dem eine Klemmverbindung für eine eintreibende Motorwelle vorgesehen ist.
In der Figur 2 ist ein Querschnitt durch den Bereich der Klemmverbindung gezeigt.
In der Figur 3 ist ein vergrößerter Ausschnitt aus der Figur 2 dargestellt.
In der Figur 4 ist ein Querschnitt durch den Bereich der Klemmverbindung eines zweiten erfindungsgemäßen Ausführungsbeispiels gezeigt.
In der Figur 5 ist ein Längsschnitt durch die Klemmverbindung gezeigt.
In der Figur 6 ist ein Querschnitt durch den Bereich der Klemmverbindung eines dritten erfindungsgemäßen Ausführungsbeispiels gezeigt, wobei zwischen Welle und aufnehmender Hohlwelle eine Hülse angeordnet ist.
In der Figur 7 ist ein Querschnitt durch den Bereich der Klemmverbindung eines vierten erfindungsgemäßen Ausführungsbeispiels gezeigt, wobei zwischen Welle und aufnehmender Hohlwelle keine Hülse angeordnet ist.

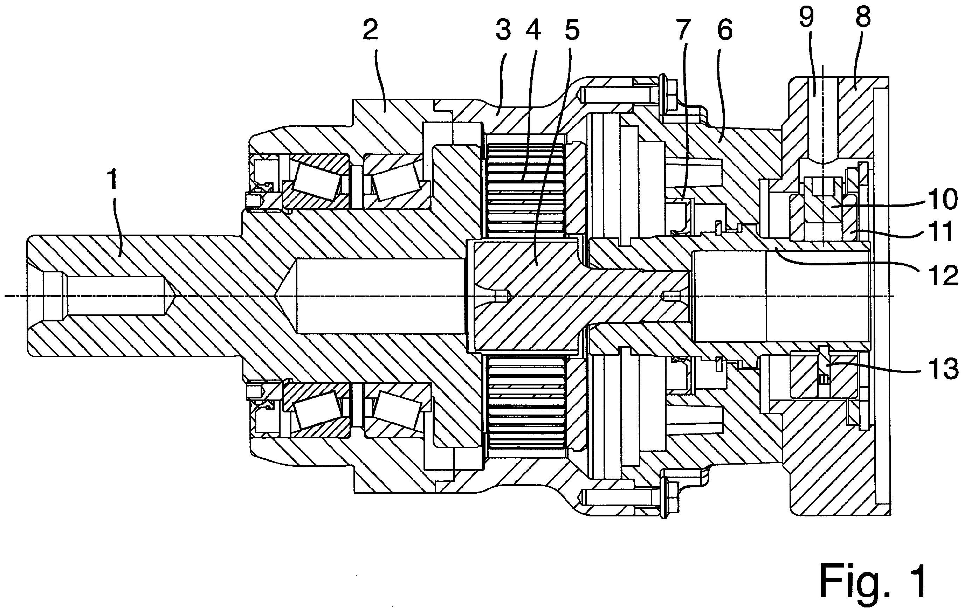

Wie in Figur 1 gezeigt, weist das Planetengetriebe eine abtreibende Welle 1 auf, die in einem Abtriebsflanschteil 2 über Wälzlager gelagert ist.

Die abtreibende Welle 1 fungiert als Planetenträger, wobei die Planetenräder mit einem Hohlrad 4 kämmen, das in einem Gehäuseteil 3 vorgesehen ist, welches zwischen dem Abtriebsflanschteil 2 und einem Eintriebsflanschteil 6 angeordnet ist.

Außerdem kämmen die Planetenräder auch mit einer Sonnenwelle 5, welche eingepresst verbunden ist mit einer Adapterwelle 12, die mittels eines Wellendichtrings 7 gegen das Eintriebsflanschteil 6 abgedichtet ist.

Die Adapterwelle 12 wird auch von einem Flanschteil 8 zumindest teilweise gehäusebildend umgeben, wobei an das Flanschteil ein Motorgehäuse anschraubbar ist.

Die Motorwelle, also Rotorwelle, des anschraubbaren Elektromotors ist in einer Aufnahmeöffnung der Adapterwelle 12 einführbar und mittels eines an deren äußeren Umfangs angeordneten Klemmrings 11 verbindbar, insbesondere kraftschlüssig verbindbar.

Hierzu weist das Flanschteil 8 eine Betätigungsöffnung auf, durch welche ein Schraubendreher oder anderes Werkzeug einführbar ist und eine Spannschraube 10, welche in eine Gewindebohrung des Klemmrings 11 einschraubbar ist bis die Spannschraube auf die Adapterwelle 12 drückt.

Ein Gewindestift 13 wird als Verdrehsicherung in eine Vertiefung der Adapterwelle 12 eingeschraubt.

Durch die eingebrachte Druckkraft der Spannschraube 10 wird der als Aufnahme fungierende dünnwandige Hohlwellenabschnitt der Adapterwelle 12 verformt.

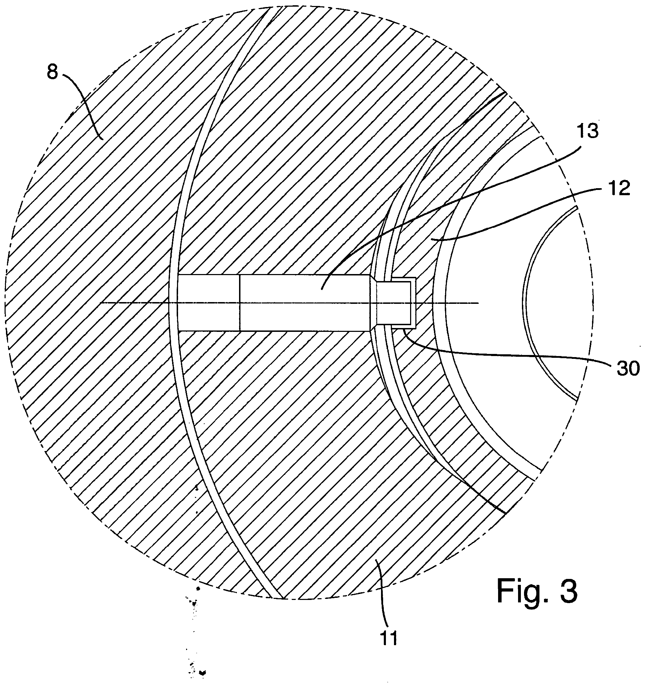

Wie in Figur 3 gezeigt, steht als Verformungsraum eine Ausfräsung zur Verfügung, die im Umfangsbereich des Gewindestifts 13 angeordnet ist.

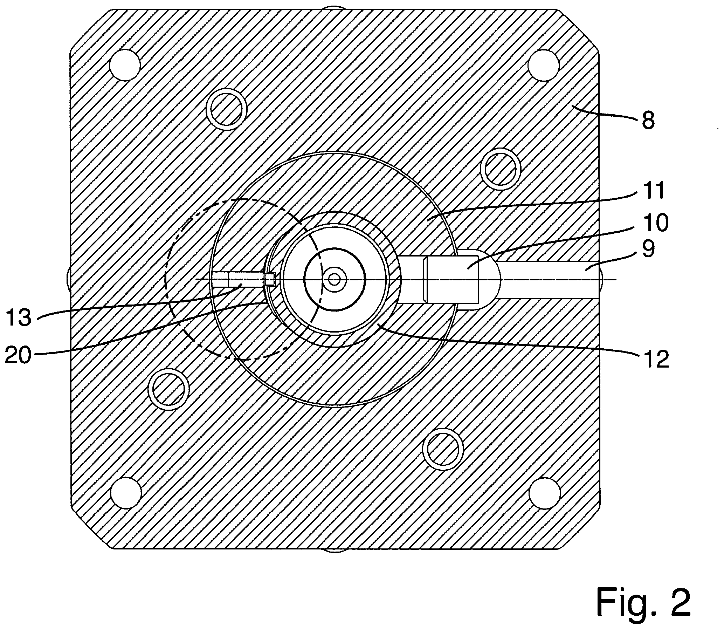

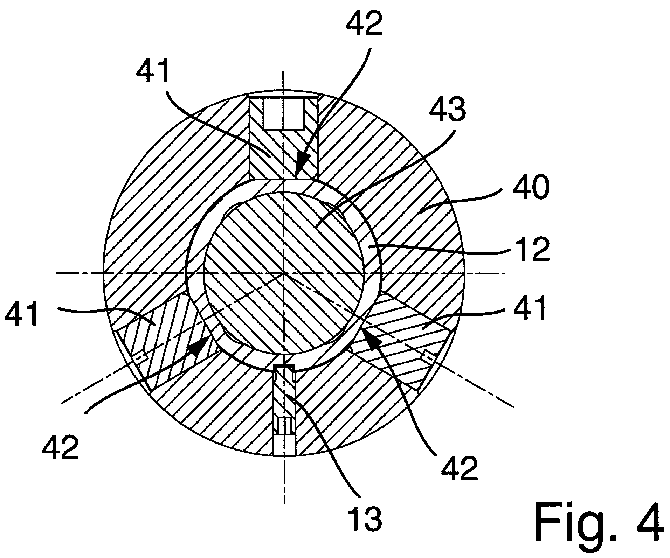

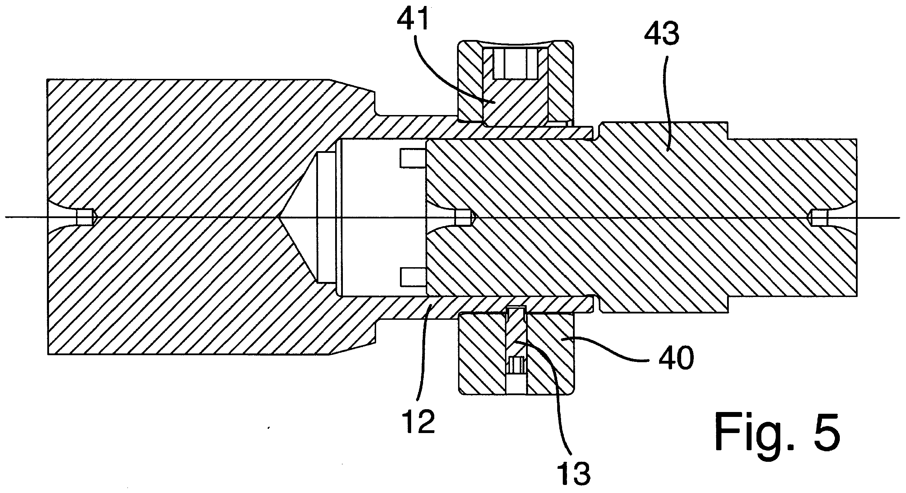

Bei einem weiteren erfindungsgemäßen Ausführungsbeispiel ist zwischen Motorwelle und Adapterwelle 12 eine Hülse zwischengeordnet, welche eine Durchmesseranpassung ermöglicht
Wie in Figur 4 und 5 gezeigt, sind auch mehrere Spannschrauben 41 vorsehbar, die in den Klemmring 40 einschraubbar sind, wobei sie in Umfangsrichtung gleichmäßig voneinander beabstandet sind. Die Spannschrauben 41 sind dabei derart weit hineinschraubbar in eine jeweilige Gewindebohrung des Klemmrings 40, bis sie auf die Adapterwelle 12 drücken und somit die Klemmverbindung herstellen. Im Unterschied zur Figur 2 sind also mehrere Spannschrauben 41 gleichmäßig am Umfang verteilt und bewirken ein gleichmäßiges Anklemmen. Vorzugsweise weist die Adapterwelle an ihrem äußerem Umfang Abflachungen auf, gegen welche die Spannschrauben 41 andrückbar sind.

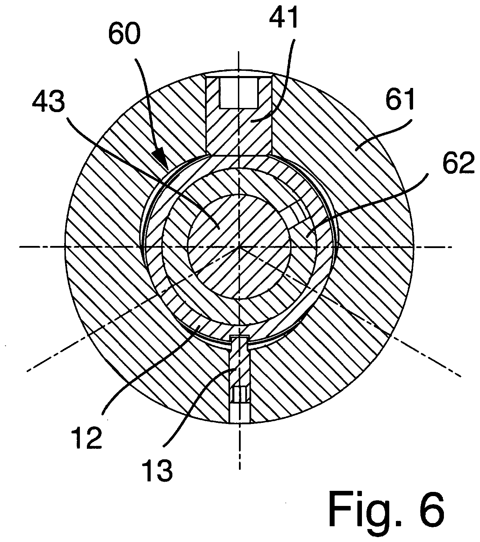

Wie in Figur 6 gezeigt, ist zwischen der Welle 43 und dem Hohlwellenabschnitt der Adapterwelle 12 eine Hülse 62 zwischengeordnet, so dass der Durchmesser der Welle einfach anpassbar ist.

Die Spannschraube 41 ist hierbei dem Gewindestift 13 diametral gegenüber angeordnet und drückt auf die Adapterwelle 12.

Der Klemmring 61 weist drei in Umfangsrichtung gleichmäßig voneinander beabstandete Ausnehmungen 60, insbesondere Rücknahmen, auf, welche an der Innenwandung des Klemmrings 61 angeordnet sind.

Die Ausnehmungen 60 sind im einfachsten Fall kreisabschnittsförmig ausgeführt, wobei sie einfach zu fertigen sind, indem zur Fertigung einer jeweiligen der Ausnehmungen 60 ein rotierendes Fräswerkzeug außermittig in die Ringöffnung des Klemmrings eingefahren wird.

Statt dieser kreisabschnittsförmigen Ausnehmungen 60 ist am Klemmring 61 auch ein n-faches Polygon, insbesondere ein hypotrochoidales Polygon, ausformbar. Dabei ist n gleich 3 oder größer als 3. Die radial hineinragenden Ecken des Polygons sind dabei in Umfangsrichtung regelmäßig voneinander beabstandet. Bei dieser Form der Ausnehmung 60 ist ein besonders effektives und gleichförmig zum Klemmring 61 beabstandetes Auswölben der Wandung der Adapterwelle 12 herstellbar.

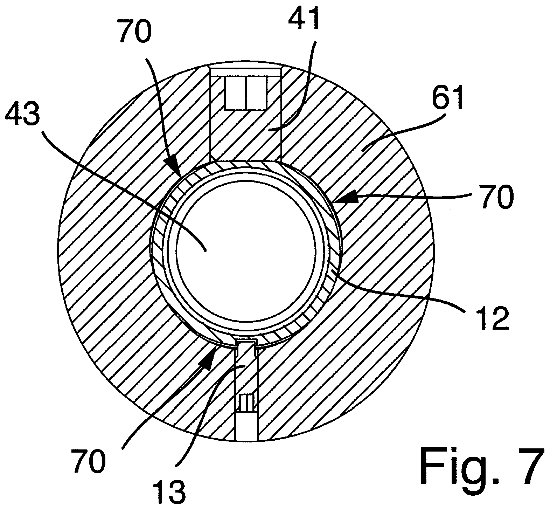

Wie in Figur 7 gezeigt, ist auch ohne Zwischenordnen einer Hülse zwischen Welle 43 und Adapterwelle 12 die erfindungsgemäße kraftschlüssige Welle-Nabe-Verbindung ausführbar. Die Ausnehmungen 70 sind den Ausnehmungen 60 entsprechend geformt.

Mittels der erfindungsgemäßen Dreipunkt-Berührung ist eine stabile und zentrierte Verbindung der Welle 43 und der Nabe, also Hohlwellenabschnitt der Adapterwelle, ermöglicht.

Das Drücken der Spannschraube 41 gegen die Wandung der Adapterwelle 12 bewirkt somit ein Anliegen des Klemmrings 61 an drei in Umfangsrichtung voneinander regelmäßig beabstandeten Umfangswinkelbereichen, wobei die Wandung der Adapterwelle sich aufwölben darf in den jeweiligen Bereich der Ausnehmung 60 hinein.

Bei einem weiteren erfindungsgemäßen Ausführungsbeispiel ist die Erfindung auch bei anderen Naben, insbesondere Hohlwellen, ausführbar Die Erfindung muss also nicht an der eintreibenden Seite eines Planetengetriebes eingesetzt werden, sondern kann auch bei anderen Vorrichtungen eingesetzt werden zur Verbindung einer Welle mit einem Aufnahmeteil, wie Nabe, Hohlwelle, oder dergleichen.

### Bezugszeichenliste

- 1: abtreibende Welle
- 2: Abtriebsflanschteil
- 3: Gehäuseteil
- 4: Hohlrad
- 5: Sonnenwelle
- 6: Eintriebsflansch
- 7: Wellendichtring
- 8: Flanschteil
- 9: Ausnehmung zur Betätigung, insbesondere Bohrung
- 10: Spannschraube
- 11: Klemmring
- 12: Adapterwelle, insbesondere mit Hohlwellenabschnitt
- 13: Gewindestift
- 20: Vertiefung
- 30: Ausnehmung, insbesondere Ausfräsung
- 40: Klemmring
- 41: Spannschraube
- 42: Abflachung
- 43: Welle, insbesondere Vollwelle, insbesondere Motorwelle
- 60: Ausnehmung, insbesondere Ausfräsung
- 61: Klemmring
- 62: Hülse
- 70: Ausnehmung, insbesondere Ausfräsung

## Patentansprüche

1. Getriebemotor mit einer Welle-Nabe-Verbindung,
wobei eine Welle (1, 43) die eine Motorwelle, insbesondere Rotorwelle eines Elektromotors, ist, in einer Aufnahmeöffnung **eines Hohlwellenabschnitts der Adapterwelle (12)** aufgenommen ist,
**wobei zwischen der Welle (1, 43) und dem Hohlwellenabschnitt der Adapterwelle (12) eine Hülse (62) zwischengeordnet ist,**
**wobei** auf dem **Hohlwellenabschnitt der Adapterwelle (12)** ein Klemmring (11, 40, 61) angeordnet ist,
wobei der Klemmring (11, 40, 61) eine Gewindebohrung, insbesondere eine radial gerichtete Gewindebohrung, aufweist, in welcher eine Spannschraube (10, 41) eingeschraubt ist,
**dadurch gekennzeichnet, dass** die Spannschraube (10, 41) **auf den Hohlwellenabschnitt der Adapterwelle (12), drückt,**
**wobei der Klemmring (11, 40, 61) an seiner dem Hohlwellenabschnitt der Adapterwelle (12) zugewandten Innenseite n Ausnehmungen (60) aufweist,**
**wobei die Ausnehmungen (60) radial gerichtete Rücknahmen der ansonsten zylindrischen Innenseite sind.**

2. Getriebemotor nach Anspruch 1,
**dadurch gekennzeichnet, dass**
die Welle (1, 43) mehrstückig, insbesondere also mehrteilig, aufgebaut ist, wobei **auf einem Vollwellenabschnitt** der Welle (1, 43) die Hülse (62) aufgesteckt ist,
so dass die Spannschraube (10, 41) **über den Hohlwellenabschnitt der Adapterwelle (12)** auf die Hülse (62) der Welle (1, 43) drückt.

3. Getriebemotor nach mindestens einem der vorangegangenen Ansprüche,
**dadurch gekennzeichnet, dass**
der Klemmring (11, 40, 61) eine weitere Gewindebohrung aufweist, in welcher ein Gewindestift (13) eingeschraubt ist, welcher in eine Vertiefung der Welle (1), insbesondere des **Hohlwellenabschnitts der Adapterwelle (12),** hineinragt.

4. Getriebemotor nach mindestens einem der vorangegangenen Ansprüche,
**dadurch gekennzeichnet, dass**
die Ausnehmungen (60) in Umfangsrichtung voneinander regelmäßig beabstandet sind.

5. Getriebemotor nach mindestens einem der vorangegangenen Ansprüche,
**dadurch gekennzeichnet, dass**
die Ausnehmungen (60) ein n-faches Polygon, insbesondere hypotrochoidales Polygon, sind.

6. Getriebemotor nach mindestens einem der vorangegangenen Ansprüche,
**dadurch gekennzeichnet, dass**
die Ausnehmungen (9) kreisabschnittsförmig ausgeformt sind,
insbesondere wobei zur Fertigung der jeweiligen Ausnehmung (9) ein außermittig zur Mittelachse des Klemmrings (11, 40, 61) angeordnetes rotierendes Fräswerkzeug axial in den Klemmring (11, 40, 61) hineinbewegbar ist.

7. Getriebemotor nach mindestens einem der vorangegangenen Ansprüche,
**dadurch gekennzeichnet, dass**
die Anzahl n gleich drei oder größer als drei ist, insbesondere aber kleiner als zehn.

8. Getriebemotor nach mindestens einem der vorangegangenen Ansprüche,
**dadurch gekennzeichnet, dass**
**die Adapterwelle (12)** eine Adapterwelle (12) eines Getriebemotors ist.

9. Getriebemotor nach mindestens einem der vorangegangenen Ansprüche,
**dadurch gekennzeichnet, dass**
ein Flanschteil (8) die **Welle-Hohlwellenabschnitt-**Verbindung mindestens teilweise gehäusebildend umgibt,
wobei das Flanschteil (8) eine radial gerichtete Öffnung aufweist, durch welche ein Werkzeug, insbesondere Schraubendreher, einführbar ist zur Betätigung der Spannschraube (10, 41).

10. Getriebemotor nach mindestens einem der vorangegangenen Ansprüche,
**dadurch gekennzeichnet, dass**
das Flanschteil (8) zwischen einem Gehäuseteil (3), insbesondere Flanschteil (8), des Motors und einem Gehäuseteil (3), insbesondere Eintriebsflansch (6), des Getriebes angeordnet ist.

11. Getriebemotor nach mindestens einem der vorangegangenen Ansprüche,
**dadurch gekennzeichnet, dass**
die Adapterwelle (12) drehfest mit einer Sonnenwelle (5) eines Planetengetriebes verbunden ist.

## Claims

1. A gear motor having a shaft-hub connection,
wherein a shaft (1, 43), which is a motor shaft, in particular a rotor shaft of an electric motor, is received in a receiving cut-out of a hollow shaft portion of the adapter shaft (12),
wherein a sleeve (62) is interposed between the shaft (1, 43) and the hollow shaft portion of the adapter shaft (12),
wherein a clamping ring (11, 40, 61) is arranged on the hollow shaft portion of the adapter shaft (12),
wherein the clamping ring (11, 40, 61) has a tapped hole, in particular a radially directed tapped hole, in which a gripping screw (10, 41) is screwed,
**characterised in that**
the gripping screw (10, 41) presses onto the hollow shaft portion of the adapter shaft (12),
wherein the clamping ring (11, 40, 61) has cut-outs (60) at its inner side facing the hollow shaft portion of the adapter shaft (12),
wherein the cut-outs (60) are radially directed recesses of the otherwise cylindrical inner side.

2. A gear motor according to claim 1,
**characterised in that**
the shaft (1, 43) is multi-piece, in particular therefore multi-part, in construction, wherein the sleeve (62) is placed upon a solid shaft portion of the shaft (1, 43), so that the gripping screw (10, 41) presses onto the sleeve (62) of the shaft (1, 43) via the hollow shaft portion of the adapter shaft (12).

3. A gear motor according to at least one of the preceding claims,
**characterised in that**
the clamping ring (11, 40, 61) has a further tapped hole, in which there is screwed a threaded pin (13) which projects into an indentation of the shaft (1), in particular of the hollow shaft portion of the adapter shaft (12).

4. A gear motor according to at least one of the preceding claims,
**characterised in that**
the cut-outs (60) are regularly spaced apart from one another in a circumferential direction.

5. A gear motor according to at least one of the preceding claims,
**characterised in that**
the cut-outs (60) are an n-sided polygon, in particular a hypotrochoidal polygon.

6. A gear motor according to at least one of the preceding claims,
**characterised in that**
the cut-outs (9) are in the shape of a segment of a circle,
in particular wherein for manufacture of the respective cut-out (9), a rotating milling tool arranged eccentrically with respect to the central axis of the clamping ring (11, 40, 61) is axially movable into the clamping ring (11, 40, 61).

7. A gear motor according to at least one of the preceding claims,
**characterised in that**
the number n is equal to three or greater than three, in particular however is less than ten.

8. A gear motor according to at least one of the preceding claims,
**characterised in that**
the adapter shaft (12) is an adapter shaft (12) of a gear motor.

9. A gear motor according to at least one of the preceding claims,
**characterised in that**
a flange part (8) surrounds the shaft-hollow shaft portion connection in a manner so as to at least partially form a housing,
wherein the flange part (8) has a radially directed opening through which a tool, in particular a screwdriver, is insertable for actuation of the gripping screw (10, 41).

10. A gear motor according to at least one of the preceding claims,
**characterised in that**
the flange part (8) is arranged between a housing part (3), in particular flange part (8), of the motor and a housing part (3), in particular input flange (6), of the gearing.

11. A gear motor according to at least one of the preceding claims,
**characterised in that**
the adapter shaft (12) is connected to a sun shaft (5) of a planetary gearing in a rotationally-fixed manner.

## Revendications

1. Moteur à engrenages muni d'une liaison arbre-moyeu,
un arbre (1, 43), qui est un arbre de moteur, notamment un arbre de rotor d'un moteur électrique, étant logé dans une ouverture de logement d'une section d'arbre creux de l'arbre d'adaptateur (12),
une douille (62) étant intercalée entre l'arbre (1, 43) et la section d'arbre creux de l'arbre d'adaptateur (12),
une bague de serrage (11, 40, 61) étant agencée sur la section d'arbre creux de l'arbre d'adaptateur (12),
la bague de serrage (11, 40, 61) comprenant un perçage fileté, notamment un perçage fileté orienté radialement, dans lequel une vis de tension (10, 41) est vissée,
**caractérisé en ce que**
la vis de tension (10, 41) appuie sur la section d'arbre creux de l'arbre d'adaptateur (12),
la bague de serrage (11, 40, 61) comprenant des évidements (60) sur son côté intérieur tourné vers la section d'arbre creux de l'arbre d'adaptateur (12),
les évidements (60) étant des retraits orientés radialement du côté intérieur autrement cylindrique.

2. Moteur à engrenages selon la revendication 1, **caractérisé en ce que** l'arbre (1, 43) est formé en plusieurs pièces, notamment donc en plusieurs parties, la douille (62) étant montée sur une section d'arbre plein de l'arbre (1, 43),
de telle sorte que la vis de tension (10, 41) appuie sur la douille (62) de l'arbre (1, 43) par l'intermédiaire de la section d'arbre creux de l'arbre d'adaptateur (12).

3. Moteur à engrenages selon au moins l'une quelconque des revendications précédentes, **caractérisé en ce que** la bague de serrage (11, 40, 61) comprend un perçage fileté supplémentaire, dans lequel une vis sans tête (13) est vissée, qui pénètre dans un creux de l'arbre (1), notamment de la section d'arbre creux de l'arbre d'adaptateur (12).

4. Moteur à engrenages selon au moins l'une quelconque des revendications précédentes, **caractérisé en ce que** les évidements (60) sont espacés régulièrement les uns des autres dans la direction périphérique.

5. Moteur à engrenages selon au moins l'une quelconque des revendications précédentes, **caractérisé en ce que** les évidements (60) sont un polygone à n côtés, notamment un polygone hypotrochoïde.

6. Moteur à engrenages selon au moins l'une quelconque des revendications précédentes, **caractérisé en ce que** les évidements (9) sont formés sous forme de segment de cercle,
un outil de fraisage rotatif agencé excentriquement à l'axe central de la bague de serrage (11, 40, 61) pouvant notamment être déplacé à l'intérieur de la bague de serrage (11, 40, 61) pour la fabrication de l'évidement (9) respectif.

7. Moteur à engrenages selon au moins l'une quelconque des revendications précédentes, **caractérisé en ce que** le nombre n est égal à trois ou supérieur à trois, toutefois notamment inférieur à dix.

8. Moteur à engrenages selon au moins l'une quelconque des revendications précédentes, **caractérisé en ce que** l'arbre d'adaptateur (12) est un arbre d'adaptateur (12) d'un moteur à engrenages.

9. Moteur à engrenages selon au moins l'une quelconque des revendications précédentes, **caractérisé en ce qu'**une partie de bride (8) entoure au moins partiellement la liaison arbre-section d'arbre creux en formant un boîtier,
la partie de bride (8) comprenant une ouverture orientée radialement, au travers de laquelle un outil, notamment un tournevis, peut être introduit pour l'actionnement de la vis de tension (10, 41).

10. Moteur à engrenages selon au moins l'une quelconque des revendications précédentes, **caractérisé en ce que** la partie de bride (8) est agencée entre une partie de boîtier (3), notamment une partie de bride (8), du moteur et une partie de boîtier (3), notamment une bride d'entrée (6), de l'engrenage.

11. Moteur à engrenages selon au moins l'une quelconque des revendications précédentes, **caractérisé en ce que** l'arbre d'adaptateur (12) est relié de manière immobile en rotation avec un arbre solaire (5) d'un engrenage planétaire.
